(19) Europäisches Patentamt
European Patent Office
Office européen des brevets

(11) **EP 4 682 599 A1**

(12) **EUROPEAN PATENT APPLICATION**

(43) Date of publication:
**21.01.2026   Bulletin 2026/04**

(21) Application number: **25190124.5**

(22) Date of filing: **17.07.2025**

(51) International Patent Classification (IPC):
*G02B 6/02* (2006.01)      *G02B 6/255* (2006.01)
*G02B 6/26* (2006.01)      *G02B 6/32* (2006.01)

(52) Cooperative Patent Classification (CPC):
**G02B 6/02328; G02B 6/2551; G02B 6/262; G02B 6/32**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.07.2024   US 202463673316 P**

(71) Applicant: **Corning Research & Development Corporation**
**Corning, New York 14831 (US)**

(72) Inventors:
• **CHEN, Xin**
  **New York, 14870 (US)**
• **HURLEY, Jason Edward**
  **New York, 14830 (US)**
• **LI, Ming-Jun**
  **New York, 14845 (US)**
• **LIU, Jie**
  **New York, 14870 (US)**
• **NORD, John Lawrence**
  **New York, 14870 (US)**

(74) Representative: **Reddie & Grose LLP**
**The White Chapel Building**
**10 Whitechapel High Street**
**London E1 8QS (GB)**

(54) **INTERCONNECTIONS BETWEEN OPTICAL FIBERS HAVING HOLLOW-CORES AND OPTICAL FIBERS HAVING HOLLOW OR SOLID-CORES**

(57)     A system and method for coupling optical fibers. The system operatively couples a first optical fiber having a hollow-core to a second optical fiber having either a hollow-core or a solid-core using a first optical coupler including a graded-index lens. The first optical coupler has a first end face and a second end face. The first end face is connected to the end face of one of the first and second optical fibers. The second end face defines an optical interface with either the end face of the other of first and second optical fibers, or the end face of a second optical coupler connected to the end face of the other of first and second optical fibers. Each optical fiber and optical coupler is positioned in the bore of either a first or second ferrule, and the ferrules positioned relative to each other to define the optical interface.

**FIG. 7**

EP 4 682 599 A1

**Description**

**Priority Application**

This application claims the benefit of priority of U.S. Provisional Application No. 63/673,316, filed on July 19, 2024, the content of which is relied upon and incorporated herein by reference in its entirety.

**Technical Field**

This disclosure relates generally to optical connectivity, and more particularly to methods of coupling hollow-core optical fibers to other hollow-core optical fibers and solid-core optical fibers.

**Background**

Optical fibers are useful in a wide variety of applications, including the telecommunications industry for voice, video, and data transmissions. Benefits of optical fibers include wide bandwidth and low noise operation. Traditional optical fibers include a solid core and a solid cladding that surrounds the core. The core and cladding are typically made of fused silica doped so that the core has a higher index of refraction than the cladding. The core and cladding of the optical fiber are thereby configured to define an optical waveguide that generally confines optical beams propagating through the optical fiber to a region of the optical fiber within and immediately adjacent to the core.

Hollow-core optical fibers are a relatively new type of optical fiber that guides light through a hollow air-filled core rather than through a solid silica core. The latest hollow-core optical fiber designs include an anti-resonant structure that can confine light over a broader range of wavelengths as compared to earlier photonic bandgap hollow-core fibers. These anti-resonant structures enable lower-loss transmission over a wider usable wavelength window than previously available from hollow-core optical fibers. A double nested anti-resonant nodeless optical fiber (DNANF) has been reported as having an attenuation level of 0.174 dB/km at 1550 nm, which is comparable to the performance of germanium doped all-glass fibers. In a more recent paper from OFC 2024, a hollow-core DNANF optical fiber was reported as having a loss of less than 0.11 dB/km. Thus, the performance of hollow-core optical fibers has become competitive with traditional solid-core optical fibers for long-haul transmission.

Hollow-core optical fiber has an effective index of refraction similar to that of air. As a result, light propagates through hollow-core optical fiber at essentially the same speed as light in vacuum (300,000 km/sec), which is about 50% faster than the speed at which light typically propagates through solid-core optical fiber (200,000 km/s). Thus, hollow-core optical fiber offers significantly reduced latency compared to solid-core optical fiber. Due to the improvements in signal loss and useable wavelengths resulting from recent research and development, hollow-core optical fiber is becoming increasingly attractive for use in commercial applications.

One problem that continues to impede the use of hollow-core optical fiber is the difficulty in forming connections between hollow-core optical fiber and widely deployed standard single-mode optical fiber. One problem with coupling hollow-core and standard single-mode optical fibers is that the mode field diameter of the hollow-core optical fiber is typically much larger than that of standard single-mode optical fiber. By way of example, the mode field diameter of standard single-mode fiber is typically 8.5-10.5 $\mu$m, depending on the wavelength of the optical beam. In contrast, the mode field diameter of a hollow-core optical fiber is typically about 70% of the core diameter. This results in a mode field diameter of about 10 to 22 $\mu$m for low-loss DNANF, and about 22-28 $\mu$m for regular nested anti-resonant nodeless fiber (NANF). One type of hollow-core optical fiber manufactured for internal use by Corning Inc, an optical technology company headquartered in Corning, New York, United States, has a mode field diameter of over 30 $\mu$m.

Although various forms of fiber tapering have been proposed to match mode field diameters between hollow-core and standard single-mode optical fibers, these methods are generally difficult and expensive to implement. Thus, there is a need in the fiber optic industry for improved systems and methods of optically coupling hollow-core optical fibers to standard single-mode optical fibers. More particularly, there is a need for systems and methods of optically coupling hollow-core optical fibers to standard single-mode optical fibers that can be performed in the field and results in a low-loss connection.

**Summary**

In one aspect of the disclosure, an improved system for coupling optical fibers is disclosed. The system includes a first ferrule having a first bore, a second ferrule having a second bore, a first hollow-core optical fiber including an end face positioned by the first bore of the first ferrule, a second optical fiber that is one of a second hollow-core optical fiber or a solid-core optical fiber including an end face positioned by the second bore of the second ferrule, and a first optical coupler including a first end face operatively coupled to a second end face by a first graded-index lens. The first end face of the first optical coupler is connected to the end face of one the first hollow-core optical fiber or the second optical fiber. The first end face of the first optical coupler is positioned within the first bore of the first ferrule if the first end face of the first optical coupler is connected to the end face of the first hollow-core optical fiber, and the first end face of the first optical coupler is positioned within the second bore of the second ferrule if the first end face of the first optical coupler is connected to the end face of the second optical fiber.

In one embodiment of the disclosed system, the system may include a second optical coupler having a first end face operatively coupled to a second end face by a second graded-index lens. In this embodiment, the second optical fiber may be the second hollow-core optical fiber, the end face of the first hollow-core optical fiber may be connected to the first end face of the first optical coupler and positioned within the first bore of the first ferrule, the end face of the second hollow-core optical fiber may be connected to the first end face of the second optical coupler and positioned within the second bore of the second ferrule, and the second end face of the first optical coupler may be operatively coupled to the second end face of the second optical coupler by positioning the first ferrule relative to the second ferrule to define an optical interface therebetween.

In another embodiment of the disclosed system, the second optical fiber may be the solid-core optical fiber, the end face of the first hollow-core optical fiber may be connected to the first end face of the first optical coupler and positioned within the first bore of the first ferrule, and the second end face of the first optical coupler may be operatively coupled to the end face of the solid-core optical fiber by positioning the first ferrule relative to the second ferrule to define an optical interface therebetween.

In another embodiment of the disclosed system, the system may further include a second optical coupler including a first end face and a second end face. In this embodiment, the second optical fiber may be the solid-core optical fiber, the end face of the solid-core optical fiber may be connected to the first end face of the first optical coupler and positioned within the second bore of the second ferrule, the end face of the first hollow-core optical fiber may be connected to the first end face of the second optical coupler and positioned within the first bore of the first ferrule, and the second end face of the first optical coupler may be operatively coupled to the second end face of the second optical coupler by positioning the first ferrule relative to the second ferrule to define an optical interface therebetween.

In another embodiment of the disclosed system, the second optical coupler may include one of a coreless optical fiber having a length less than or equal to 20 $\mu$m or a graded-index optical fiber having a length less than or equal to 20 $\mu$m that operatively couples the first end face of the second optical coupler to the second end face of the second optical coupler.

In another embodiment of the disclosed system, each graded-index lens may include a graded-index optical fiber.

In another embodiment of the disclosed system, the graded-index optical fiber may have a core diameter of between 72 $\mu$m and 88 $\mu$m and a refractive index delta of between 0.9% and 1.1%.

In another embodiment of the disclosed system, each graded-index lens may have a length of between 0.225 pitch and 0.275 pitch.

In another embodiment of the disclosed system, each graded-index lens may have a length of a quarter-pitch.

In another embodiment of the disclosed system, each connection between each optical coupler and each end face may be made using fusion splicing.

In another aspect of the disclosure, an improved method of coupling optical fibers is disclosed. The method includes positioning the end face of the first hollow-core optical fiber with the bore of the first ferrule, positioning the end face of the second optical fiber that is one of the second hollow-core optical fiber or the solid-core optical fiber with the bore of the second ferrule, connecting the first end face of the first optical coupler including the first graded-index lens to the end face of one of the first hollow-core optical fiber or the second optical fiber, positioning the first end face of the first optical coupler within the bore of the first ferrule if the first end face of the first optical coupler is connected to the end face of the first hollow-core optical fiber, and positioning the first end face of the first optical coupler within the bore of the second ferrule if the first end face of the first optical coupler is connected to the end face of the second optical fiber.

In one embodiment of the disclosed method, the second optical fiber may be the second hollow-core optical fiber, and the end face of the first hollow-core optical fiber may be connected to the first end face of the first optical coupler and positioned within the bore of the first ferrule. In this embodiment, the method may further include connecting the end face of the second hollow-core optical fiber to the first end face of the second optical coupler including the second graded index lens, positioning the first end face of the second optical coupler within the bore of the second ferrule, and operatively coupling the second end face of the first optical coupler to the second end face of the second optical coupler by positioning the first ferrule relative to the second ferrule to define the optical interface therebetween.

In another embodiment of the disclosed method, the second optical fiber may be the solid-core optical fiber, and the end face of the first hollow-core optical fiber may be connected to the first end face of the first optical coupler and positioned within the bore of the first ferrule. In this embodiment, the method may further include operatively coupling the second end face of the first optical coupler to the end face of the solid-core optical fiber by positioning the first ferrule relative to the second ferrule to define the optical interface therebetween.

In another embodiment of the disclosed method, the second optical fiber may be the solid-core optical fiber, and the end face of the solid-core optical fiber may be connected to the first end face of the first optical coupler and positioned within the bore of the second ferrule. In this embodiment, the method may further include connecting the end face of the first hollow-core optical fiber to a first end face of a second optical coupler, positioning the first end face of the second optical coupler within the bore of the first ferrule, and operatively coupling a second end face of the first optical coupler to a second end face of the second optical coupler by positioning the first ferrule relative to the second ferrule to define an optical interface therebetween.

In another embodiment of the disclosed method, the second optical coupler may include one of a coreless optical fiber having a length less than or equal to 20 $\mu$m or a graded-index optical fiber having a length less than or equal to 20 $\mu$m that operatively couples the first end face of the second optical coupler to the second end face of the second optical coupler.

In another embodiment of the disclosed method, each graded-index lens may comprise a graded-index optical fiber.

In another embodiment of the disclosed method, the graded-index optical fiber may have a core diameter of between 72 $\mu$m and 88 $\mu$m and a index of refraction delta of between 0.9% and 1.1%.

In another embodiment of the disclosed method, each graded-index lens may have a length of between 0.225 pitch and 0.275 pitch.

In another embodiment of the disclosed method, each graded-index lens may have a length of a quarter-pitch.

In another embodiment of the disclosed method, each connection between each optical coupler and each end face may be made using fusion splicing.

## Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.

Fig. 1 is a diagrammatic cross-sectional view of an exemplary hollow-core optical fiber.

Fig. 2 is diagrammatic view of a graded-index lens having an optical axis and a refractive index that varies with distance from the optical axis.

Fig. 3 is a diagrammatic cross-sectional view of an exemplary graded-index optical fiber that may be used to provide a graded-index lens such as depicted by Fig. 2.

Figs. 4 and 5 are graphical views of a beam of light propagating through a graded-index optical fiber such as depicted by Fig. 3.

Fig. 6 is a graphical view depicting a plot of beam diameter versus position for the beam of light propagating through the graded-index optical fiber of Fig. 5.

Fig 7 is a diagrammatic view of a fiber optical coupling system that couples a hollow-core optical fiber such as depicted by Fig. 1 to a solid-core optical fiber using a length of the graded-index optical fiber such as depicted by Fig. 3.

Fig. 8 is a graphical view depicting a plot of field strength versus radius for a Gaussian beam having a mode field diameter of 32 $\mu$m.

Fig. 9 is a graphical view depicting a plot of refractive index versus radius for a graded-index optical fiber having a core diameter of 80 $\mu$m.

Fig. 10 is a graphical view depicting propagation of a beam of light through a length of the graded-index optical fiber having the index profile depicted by Fig. 9.

Fig. 11 is a graphical view depicting a plot of beam diameter versus position for the graded-index optical fiber of Figs 9 and 10.

Fig. 12 is a diagrammatic view of an exemplary fiber optic coupling system for operatively coupling two hollow-core optical fibers.

Figs. 13 and 14 are diagrammatic views of exemplary fiber optic coupling systems for operatively coupling a hollow-core optical fiber to a solid-core optical fiber.

Fig. 15 is a diagrammatic view of another exemplary fiber optic coupling system for operatively coupling two hollow-core optical fibers.

Fig. 16 is a diagrammatic view of another exemplary fiber optic coupling system for operatively coupling a hollow-core optical fiber to a solid-core optical fiber.

Fig. 17 is a diagrammatic view of another exemplary fiber optic coupling system for operatively coupling two hollow-core optical fibers that includes an angled optical interface.

Fig. 18 is a graphical view of a beam of light propagating through two hollow-core optical fibers operatively coupled by a graded-index optical fiber such as depicted by Fig. 12.

Fig. 19 is a graphical view depicting a plot of beam diameter versus position for the beam of light propagating through the graded-index optical fiber of 18.

It should be understood that the appended drawings are not necessarily to scale, and may present a somewhat simplified representation of various features illustrative of the basic principles of the disclosure. For example, certain features illustrated by the drawings may be enlarged or distorted relative to others to facilitate visualization and a clear understanding.

**Detailed Description**

Various embodiments will be further clarified by examples in the description below. In general, the description relates to systems and methods that enable hollow-core optical fibers to be coupled to both solid-core optical fibers (e.g., a standard single-mode optical fiber) and to other hollow-core optical fibers.

The disclosed systems and methods for coupling hollow-core optical fibers to other optical fibers include the use of optical couplers that include one or more graded-index lenses. For example, a graded-index lens having a length of about a quarter-pitch may be used to operatively couple a hollow-core optical fiber and a solid-core optical fiber. As another example, one or more graded-index lenses with a total length of about a half-pitch may be used to operatively couple two hollow-core optical fibers. In either case, it has been determined that the performance of the disclosed fiber optic coupling systems is tolerant to variations in the length of the graded-index lens or lenses used. That is, the optical coupling performance remains essentially the same over a range of lengths. In another exemplary embodiment, a length of coreless optical fiber may be used to provide an end face for a hollow-core optical fiber to prevent foreign matter from entering the hollow-core.

A combination of one or more lengths of graded-index optical fiber and coreless optical fiber may be configured to provide consistent low loss connections between a hollow-core optical fiber and another hollow-core optical fiber or a solid-core optical fiber using a repeatable process. One or more of the hollow-core optical fibers, graded-index optical fibers, and lengths of coreless optical fiber may be integrated with fiber optic connectors, or portions thereof (e.g., one or more ferrules), to facilitate low-loss optical connections between hollow-core optical fibers and other optical fibers.

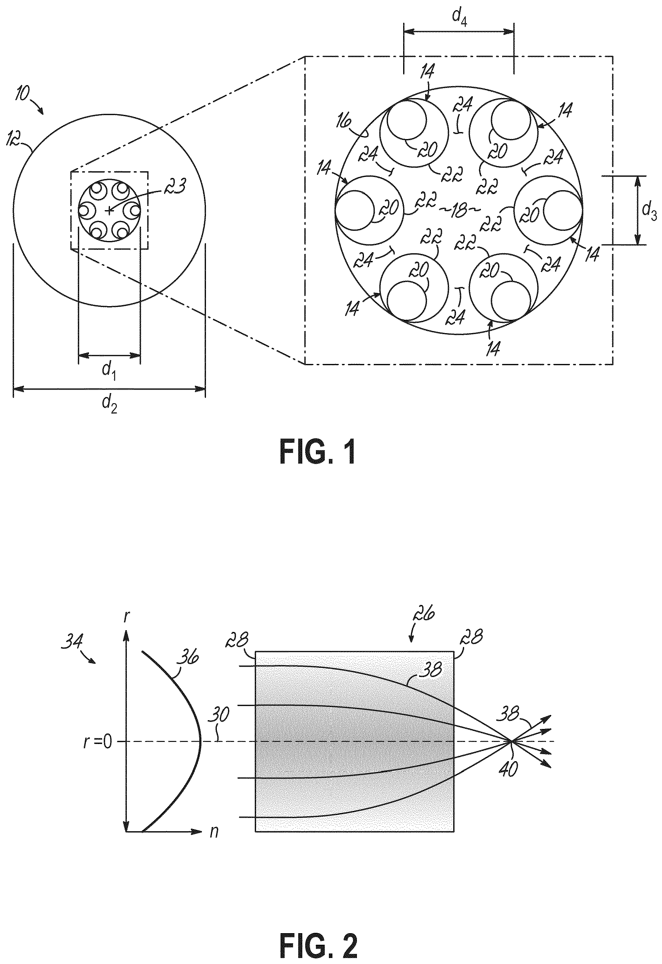

Fig. 1 depicts a cross-sectional axial view of an exemplary hollow-core optical fiber 10. The hollow-core optical fiber 10 includes a cladding 12 and a plurality of structural tubes 14 arranged circumferentially on an inner surface 16 of the cladding 12 to define a hollow-core 18. The depicted embodiment includes six structural tubes 14 each having a nested structure comprising an inner tube 20 and an outer tube 22. However, it should be understood that the fiber optic coupling systems and methods disclosed herein may be used with hollow-core optical fibers 10 having other numbers of structural tubes 14, as well as structural tubes 14 that comprise a single tube (i.e., unnested structural tubes 14) or include more than two nested tubes. Embodiments of the disclosed coupling systems may also be used with other types of hollow-core optical fiber 10, such as but not limited to, photonic crystal fibers and photonic-bandgap fibers.

The cladding 12 and structural tubes 14 may be formed, for example, of doped or undoped silica glass. The cladding 12 may have an inner diameter $d_1$ and an outer diameter $d_2$, and the structural tubes 14 may have an outer diameter $d_3$. The dimensions of the cladding 12 and structural tubes 14 may be selected so that the hollow-core 18 has a diameter $d_4$ equal to twice the radius thereof. The radius of the hollow-core 18 may be defined, for example, as the minimum distance between the surfaces of structural tubes 14 and an optical axis 23 of the hollow-core optical fiber 10. The dimensions may also be selected so that adjacent structural tubes 14 are separated by a gap 24. The gap 24 may prevent adjacent structural tubes 14 from contacting each other. The gap 24 may thereby avoid the formation of a waveguide along a line of contact between the structural tubes 14 due to a doubling of the wall thickness of the structural tubes 14 where they come into contact.

The dimensions and other characteristics of the cladding 12 and structural tubes 14 (e.g., the refractive index) may be selected to define a waveguide that generally confines optical beams propagating through the hollow-core optical fiber 10 to the hollow-core 18. The thickness of the walls of the structural tubes 14 may also be selected to provide an anti-resonant effect that reduces leakage of optical beams from the hollow-core 18 into the structural tubes 14. This anti-resonant effect may be optimized by providing the structural tubes 14 with a wall thickness that is an odd multiple of a quarter wavelength of the optical beam. In an exemplary embodiment of the depicted hollow-core optical fiber 10, $d_1$ may be about 100 $\mu$m, $d_2$ may be about 250 $\mu$m, $d_3$ may be about 30 $\mu$m, and $d_4$ may be about 40 $\mu$m. However, the fiber optic coupling systems and methods disclosed herein are not limited to hollow-core optical fibers having any particular set of structural dimensions.

Fig. 2 depicts an exemplary graded-index lens 26 having two generally parallel optical surfaces 28 and an optical axis 30 generally perpendicular to each optical surface 28. The refractive index of the graded-index lens 26 is a function of radius from the optical axis 30. Graph 34 includes an exemplary plot 36 of refractive index $n$ versus radius $r$ that decreases with distance from the optical axis 30. The performance of the graded-index lens 26 may depend on the gradient function providing a continuous change of the refractive index within the lens material. This gradient function may be referred to as the "index profile" of the graded-index lens 26.

Rather than a curved optical surface as in conventional lenses, the index profile of graded-index lens 26 enables it to refract parallel rays of light 38 so that they form a focal point 40 without the need for curved optical surfaces 28. Advantageously, flat optical surfaces 28 may facilitate direct coupling of a graded-index lens 26 to the end face of an optical fiber.

In an exemplary embodiment, the index profile for the graded-index lens 26 may be provided by:

$$n(r) = n_1 \times \text{sech}(g \times r) \quad Eqn.\, 1$$

where $n_1$ is the peak index of refraction (i.e., the index of refraction along the optical axis 30), and $g$ is a gradient factor. A continuous cosine ray trace may be realized within a sufficiently long graded-index lens. A geometrical length Z of the lens may be calculated from the characteristic pitch P of the lens using the following equation:

$$Z = \frac{2\pi \times P}{g} \quad Eqn.\, 2$$

A quarter-pitch is often mentioned as a characteristic length as it is roughly the length a graded-index lens must be to convert light emitted from a focal point 40 into a collimated beam, and to focus a collimated beam to form a focal point 40. Graded-index lenses often have an index profile that is nearly parabolic in shape, although other index profiles may be used.

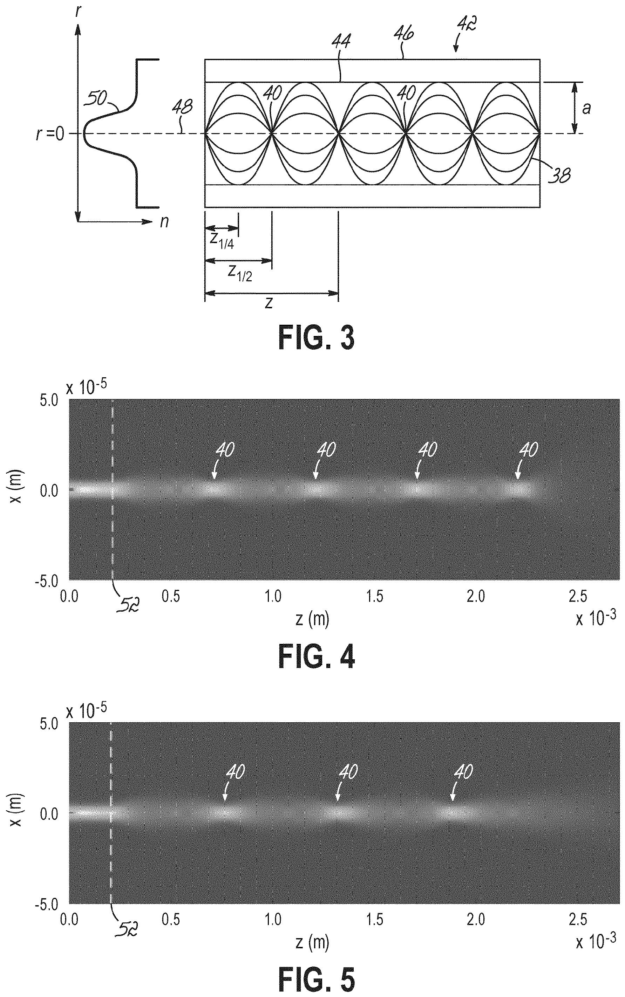

Fig. 3 depicts a graded-index optical fiber 42 including a core 44 having a radius a, a cladding 46, and an optical axis 48. Plot 50 depicts an index profile of the core 44, and shows a refractive index $n(r)$ that decreases with increasing radial distance $r$ from the optical axis 48. The varying refractive index $n(r)$ of the core 44 of graded-index optical fiber 42 contrasts with a conventional "step-index" optical fiber, which has a core having a generally uniform index of refraction surrounded by a cladding with a different (e.g., lower) index of refraction. Because the regions of the core 44 of graded-index optical fiber 42 closer to the optical axis 48 have a higher index of refraction than the regions closer to the cladding 46, rays of light 38 tend to follow sinusoidal paths down the graded-index optical fiber 42. Graded-index optical fibers having a parabolic index profile may exhibit continual refocusing of light at integer multiples of $Z_{1/2}$. This phenomena is shown in Fig. 3 (as well as in Figs. 4 and 5 described below) by the presence of focal points 40 spaced apart by an optical distance of $Z_{1/2}$.

Accordingly, a length of multi-mode graded-index optical fiber (MMF) may be used to provide a graded-index lens. The profile parameters of a graded-index optical fiber 42 may be defined by,

$$g = \frac{\sqrt{2\Delta}}{a} \quad Eqn.\, 3$$

where a is the radius of the core and $\Delta$ is the refractive index delta. The refractive index delta may be provided by,

$$\Delta = \frac{n_1^2 - n_2^2}{2 \times n_1^2} \quad Eqn.\, 4$$

where $n_1$ is the peak refractive index of the core 44 (i.e., the refractive index at radius $r = 0$), and $n_2$ is the refractive index of the cladding 46. Typically, the refractive index delta is expressed as a percentage.

Based on the above equations, the quarter-pitch length $Z_{1/4}$ of a graded-index lens comprising a length of multi-mode graded-index optical fiber can be determined as:

$$Z_{1/4} = \frac{\pi a}{2} \times \frac{1}{\sqrt{2\Delta}} \quad Eqn.\, 5$$

Commonly available multi-mode graded-index optical fibers include OM1 graded-index optical fiber and OM2 graded-index optical fiber. OM1 graded-index optical fiber has a refractive index delta of about 2% and a core diameter of about 62.5 $\mu$m. OM2 graded-index optical fiber has a refractive index delta of about 1% and a core diameter of about 50 $\mu$m. Using the above equations, OM1 graded-index optical fiber has a calculated quarter-pitch $Z_{1/4}$ of about 245 $\mu$m, and OM2 graded-index optical fiber has a calculated quarter-pitch $Z_{1/4}$ of about 277 $\mu$m. Actual modeling based on practical refractive index profiles of OM1 and OM2 graded-index optical fibers yields quarter-pitch lengths close to the calculated quarter-pitch. The ready availability of OM1 and OM2 graded-index optical fibers may make them a convenient raw material for fabricating graded-index lenses.

To optimally couple light between optical fibers having different mode field diameters, a length of graded-index optical fiber may be adjusted to fine tune the effective focal length of the resulting graded-index lens. Figs 4 and 5 depict propagation of a beam of light through a graded-index optical fiber as modeled by a computer. Fig. 4 depicts a graph showing propagation of the beam of light through a 2 mm length of OM1 graded-index optical fiber. Fig. 5 depicts a graph showing propagation of the beam of light through a 2 mm length of OM2 graded-index optical fiber. In each case, the beam of light is provided to the graded-index optical fiber from a standard single-mode optical fiber, such as Corning SMF-28, which is manufactured by Corning, Inc. In each figure, a dashed line shows the position of the transition 52 between the standard single-mode optical fiber and the graded-index optical fiber, which occurs at 0.2 mm on the horizontal axis. In both Figs. 4 and 5, the beam of light exits the graded-index optical fiber at about 2.2 mm on the horizontal axis. At this point, the beam of light is propagating through free-space, and thus begins diverging according to the laws of diffraction. Lighter areas of each graph indicate regions in which the intensity of the optical beam is relatively high due to the beam diameter being narrow. It can be seen from the graphs of Figs. 4 and 5 that after entering each graded-index optical fiber, the beam of light evolves into a beam having a periodic pattern of alternating narrow and wide beam diameters.

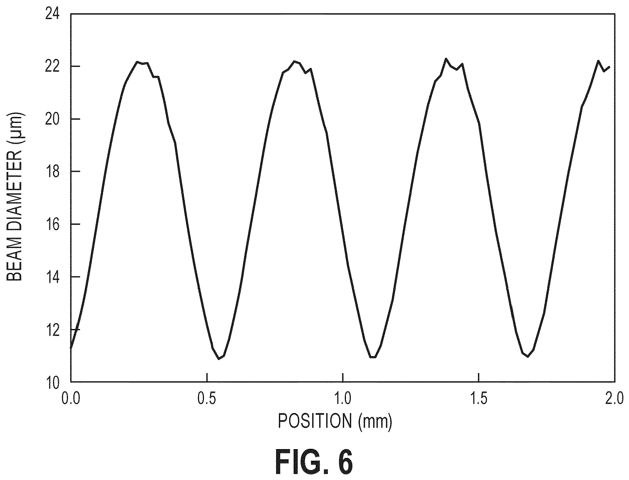

Fig. 6 depicts a graph including a plot of beam diameter versus position for the beam of light propagating through the OM2 graded-index optical fiber modeled for Fig. 5. As used herein, the term "beam diameter" refers to a distance equal to twice the 1/e field radius for the beam of light in question. The 1/e field radius is the same boundary level that is generally used to define the mode field diameter. Using this definition of beam diameter, the length of graded-index optical fiber that provides a quarter-pitch graded-index lens was determined to be about 240 $\mu$m for the OM1 graded-index optical fiber and about 260 $\mu$m for the OM2 graded-index optical fiber. These values are slightly different from the values provided by Eqn. 5. Because the computer modelling software accounts for contributions from the refractive profiles of the optical fiber more accurately than Eqn. 5, including the deviation of the index profile from a true parabolic shape, the numbers provided by the modelling software are considered to be more accurate than those provided by Eqn. 5.

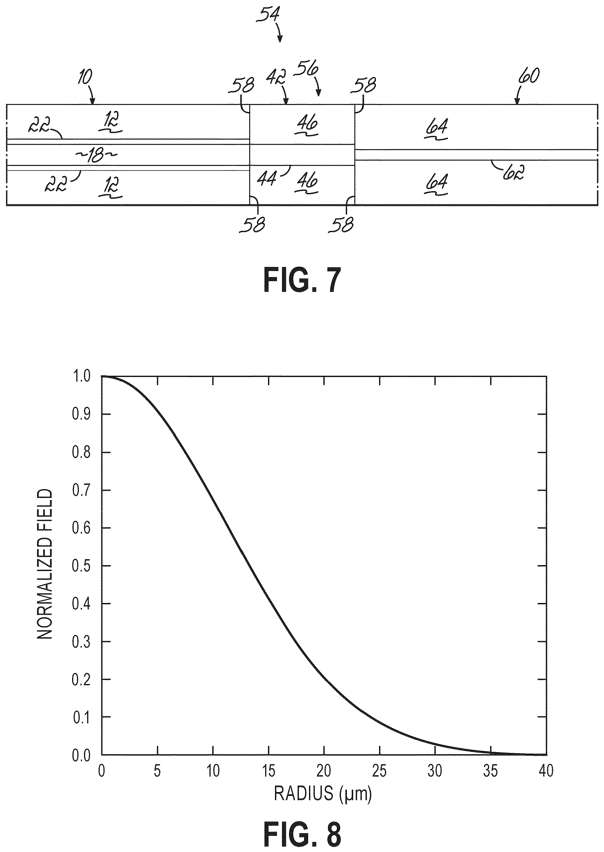

Fig. 7 depicts an exemplary fiber optic coupling system 54 including an optical coupler 56 operatively coupling a hollow-core optical fiber 10 to a standard single-mode optical fiber 60. The optical coupler 56 may include a length of graded-index optical fiber 42 including proximal and distal end faces 58. One end face 58 of graded-index optical fiber 42 may be connected to the end face 58 of hollow-core optical fiber 10, and the other end face 58 of graded-index optical fiber 42 may be connected to the end face 58 of single-mode optical fiber 60. The connected end faces 58 may be fusion spliced, bonded using an optical adhesive, or otherwise held in place against each other by any suitable means. In some cases, a thin layer refractive index matching agent (e.g., a silicon-based liquid or gel), optical adhesive, or other suitable optical material may be introduced between the connected end faces 58 to improve the optical performance of the connection.

The single-mode optical fiber 60 includes a solid-core 62 (e.g., an 8.2 $\mu$m diameter silica core with a refractive index $n \approx 1.452$) surrounded by a cladding 64 (e.g., a silica cladding with a refractive index $n \approx 1.447$). Coupling losses between the hollow-core optical fiber 10 and the single-mode optical fiber 60 were determined for optical couplers 56 comprising various types and lengths of OM1 and OM2 graded-index optical fiber 42 using the configuration depicted by Fig. 7 and the above described characteristics of OM1 and OM2 graded-index optical fiber.

Coupling loss modeling was conducted using BPM-Matlab, which is an open-source optical propagation simulation tool in MATLAB. MATLAB is proprietary multi-paradigm programming language and numeric computing environment developed by MathWorks, a corporation located in Natick, Massachusetts, United States. The exemplary hollow-core optical fiber 10 depicted in Fig. 1 has a nominal mode field diameter of 32 $\mu$m, which is higher (and thus more difficult to couple to) than those typically found in the art. Table I shows the modeled loss assuming 32 $\mu$m mode field diameter Gaussian field at 1310 nm using the optical coupling configuration depicted by Fig. 7. As can be seen from the experimental data presented in Table I, using OM2 graded-index optical fiber for the optical coupler 56 generally provides lower coupling losses than using OM1 graded-index optical fiber. The results at 1550 nm are consistent with those for 1310 nm, and are not separately presented.

Fig. 8 depicts a graph including a plot of field strength versus radius for a Gaussian beam having a mode field diameter of 32 $\mu$m. Based on the distribution of energy in the Gaussian beam, it has been determined that less of the beam of light emitted by the hollow-core optical fiber 10 falls outside the 50 $\mu$m diameter core 44 of the OM2 graded-index optical fiber as compared to the 62.5 $\mu$m core diameter core 44 of the OM1 graded-index optical fiber due to the larger beam. Because of the larger beam, the graded-index lens is smaller than the beam field resulting in beam energy falling outside the core. The reduced amount of optical beam outside the core 44 is believed to contribute to the lowest recorded coupling loss of the OM2 graded-index optical fiber (0.56 dB) being better than the lowest recorded coupling loss of the OM1 graded-index optical fiber (0.94 dB). At 1550 nm, the minimum loss was reduced to 0.4 dB, which was determined using beam propagation-based modeling.

| TABLE I - OPTICAL COUPLING EFFICIENCY AND LOSS | | | |
|---|---|---|---|
| MMF Type | MMF Length ($\mu$m) | Coupling Efficiency | Coupling Loss (dB) |
| OM2 | 250 | 81.80 | -0.87 |
| OM2 | 275 | 87.97 | -0.56 |
| OM2 | 300 | 86.70 | -0.62 |
| OM2 | 350 | 68.60 | -1.64 |
| OM1 | 200 | 65.80 | -1.82 |
| OM1 | 250 | 80.50 | -0.94 |
| OM1 | 275 | 78.23 | -1.07 |
| OM1 | 300 | 69.86 | -1.56 |

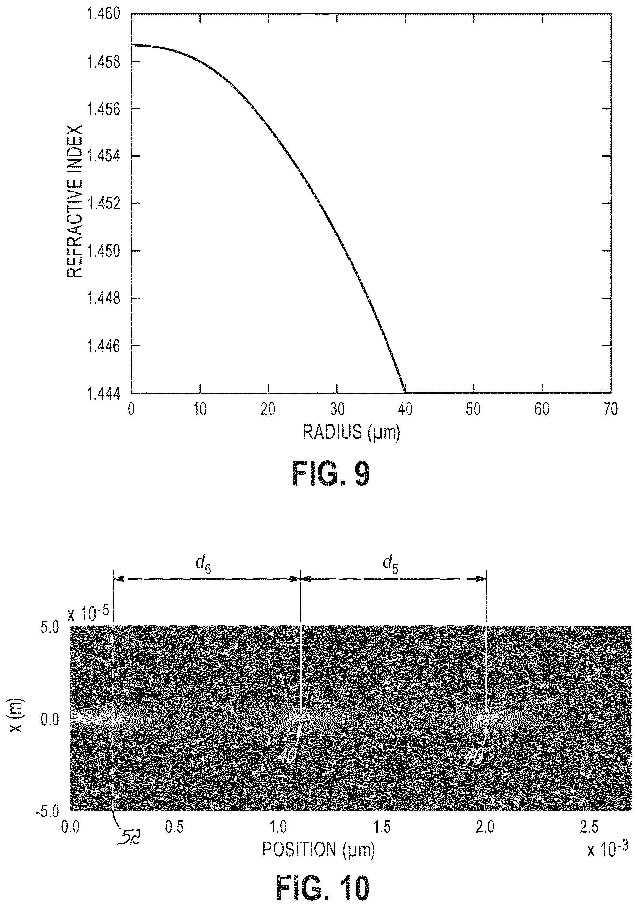

Fig. 9 depicts a graph including a plot of an index profile (e.g., for $\lambda$ = 1550 nm) for an exemplary graded-index optical fiber having the same nominal core index delta as OM2 (1%), but with a core diameter of 80 $\mu$m (i.e., a core radius of 40 $\mu$m). Fig. 10 depicts a graph showing propagation of a beam of light through a 2 mm length of the graded-index optical fiber having the index profile depicted by Fig. 9. As is the case with Figs. 4 and 5, the beam of light is provided to the graded-index optical fiber from a standard single-mode optical fiber. A dashed line indicates the transition 52 from the single-mode optical fiber to the graded-index optical fiber, and occurs at 0.2 mm on the horizontal axis. The beam of light exits the graded-index optical fiber at about 2.2 mm on the horizontal axis and enters a 0.5 mm length of air. As can be seen from the graph, the distance $d_5$ between focal points 40 within the graded-index optical fiber and the distance $d_6$ from the transition 52 to the initial focal point 40 are each about 890 $\mu$m, indicating a pitch length Z of about 1780 $\mu$m. Thus, a graded-index optical fiber 42 for use as an optical coupler 56 for a single-mode optical fiber 60 that produces a collimated beam at the distal end face 58 of the optical coupler 56 may have a length of about 445 $\mu$m, i.e., about a quarter-pitch. In any case, the optimal length of graded-optical fiber for any specific optical coupler 56 may be determined using modelling or through experimentation for each application.

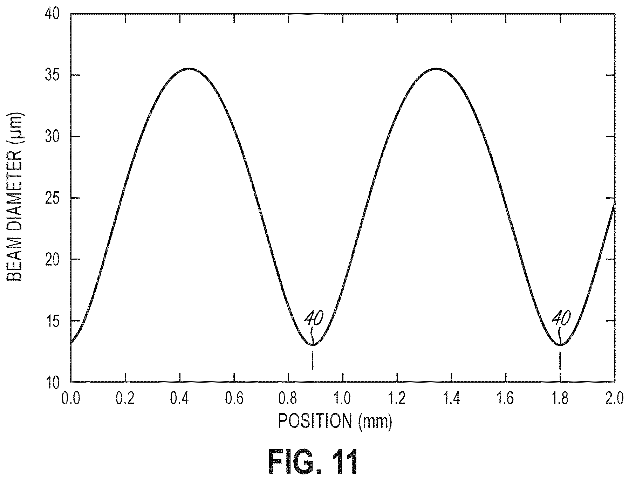

Fig. 11 depicts a graph including a plot of the beam diameter inside the graded-index optical fiber 42. The quarter-pitch length $Z_{1/4}$ for the depicted graded-index optical fiber 42 was determined to be about 445 $\mu$m based on a spacing of about 890 $\mu$m between focal points 40. A length of this graded-index optical fiber 47 was used to define an optical coupler 56 having a quarter-pitch graded-index lens 26, and the coupling loss calculated for the optical coupling configuration depicted by Fig. 7. The coupling loss was calculated for various lengths of the graded-index optical fiber 42 to couple a hollow-core optical fiber 10 having a 32 $\mu$m mode field diameter at 1550 nm to a standard single-mode optical fiber 60. The simulated results are shown in Table II. Optical modeling shows a good tolerance to variations in the length of the graded-index optical fiber 42, with a coupling loss $\leq$ 0.2 dB for lengths over a range of 430 to 480 $\mu$m. Thus, in this exemplary embodiment, a quarter-pitch graded-index lens 26 may be provided by a graded-index optical fiber 42 having a length of 430 to 480 $\mu$m. Moreover, acceptable performance may be obtained with a graded-index optical fiber 42 having a length within $\pm$10% of a quarter-pitch, i.e., a length between 0.225 pitch and 0.275 pitch.

| TABLE II - OPTICAL COUPLING EFFICIENCY AND LOSS | | |
|---|---|---|
| MMF Length ($\mu$m) | Coupling Coefficient | Coupling Loss (dB) |
| 420 | 0.944 | -0.25 |
| 430 | 0.956 | -0.20 |
| 440 | 0.965 | -0.15 |
| 450 | 0.971 | -0.13 |
| 460 | 0.972 | -0.12 |
| 470 | 0.968 | -0.14 |
| 480 | 0.961 | -0.17 |
| 490 | 0.948 | -0.23 |

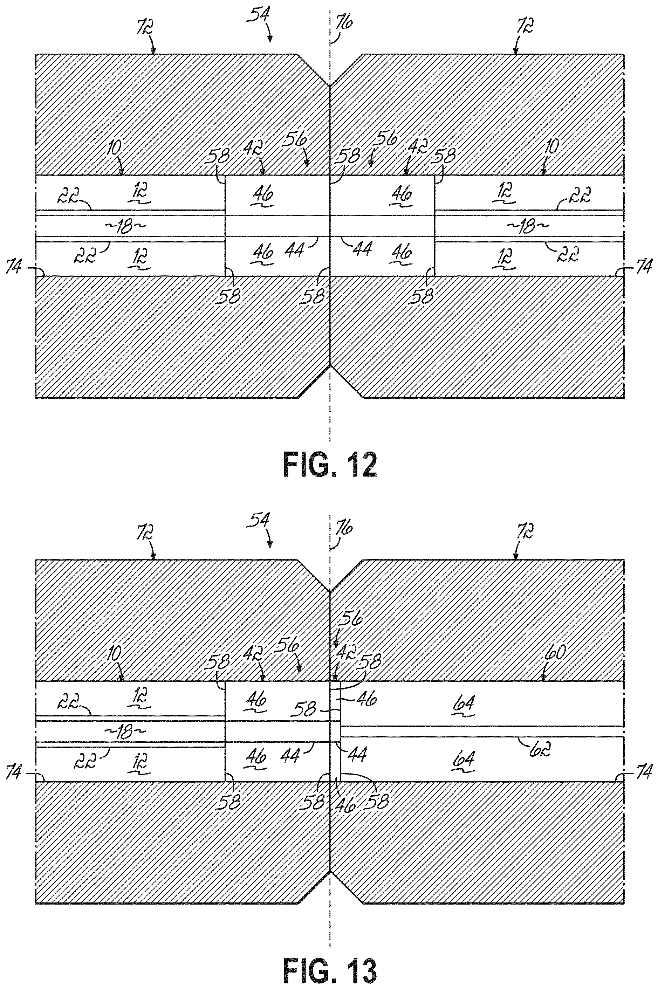

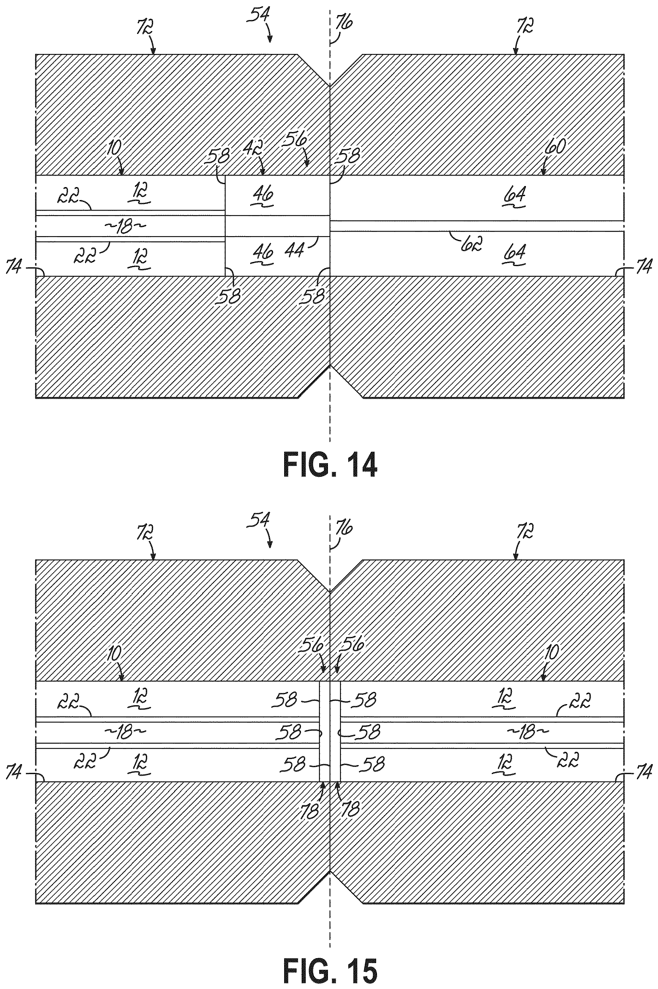

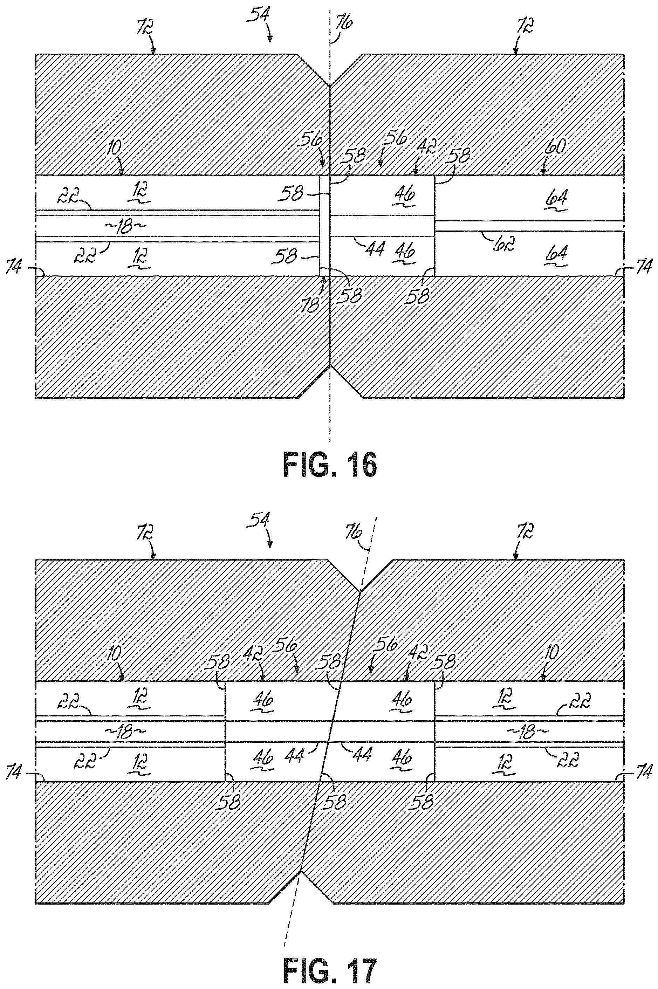

Approaches to configuring the fiber optic coupling systems disclosed herein include a "wide-beam" approach and a "narrow-beam" approach. Figs. 12-14 show examples of the narrow-beam approach, which positions an optical interface of the fiber optic coupling system 54 near a point where the diameter of the optical beam being coupled is at a minimum, e.g., a focal point 40. Figs. 15 and 16 show examples of the wide-beam approach, which positions the optical interface of the fiber optic coupling system 54 near a point where the divergence of the optical beam being coupled is at a minimum. This point of minimum beam divergence may coincide with a point where the beam is collimated or nearly collimated, and the beam width is at or near a maximum.

Fig. 12 depicts an exemplary fiber optic coupling system 54 operatively coupling two hollow-core optical fibers 10. The fiber optic coupling system 54 may include a plurality of ferrules 72 (e.g., two ferrules 72) each having a bore 74, and a plurality of optical couplers 56 (e.g., two optical couplers 56) each operatively coupled to a respective one of the hollow-core optical fibers 10. Each optical coupler 56 includes a graded-index lens with a length of between 0.225 pitch and 0.275 pitch, and more preferably about one quarter-pitch (i.e., 0.250 pitch). The graded-index lens may be provided by a 460 $\mu$m length of graded-index optical fiber 42 having a core 44 with a diameter of between 72 $\mu$m and 88 $\mu$m and a refractive index delta of between 0.9% and 1.1%, for example. Each hollow-core optical fiber 10 and optical coupler 56 paring may be positioned by (e.g., within) in the bore 74 of a respective ferrule 72. The ferrule 72 may support and position the hollow-core optical fibers 10 and optical couplers 56 with respect to each other and a housing of a fiber optic connector (not shown). When the two ferrules 72 are mated, the end faces 58 of optical couplers 56 may be coaxially aligned by the ferrules 72 so that they come into physical contact with each other to define an optical interface 76. The total length of the optical couplers 56 may be about a half-pitch, e.g.,~ 920 $\mu$m. Accordingly, the mode field of each hollow-core optical fiber 10 may be imaged into the other hollow-core optical fiber 10 such that a low connection loss is achieved.

Fig. 13 depicts another exemplary fiber optic coupling system 54 operatively coupling a hollow-core optical fiber 10 and a single-mode optical fiber 60. The fiber optic coupling system 54 may include a plurality of ferrules 72 (e.g., two ferrules 72) each having a bore 74, and a plurality of optical couplers 56 (e.g., two optical couplers 56). One of the optical couplers 56 is connected to the hollow-core optical fiber 10, and the other of the optical couplers is connected to the single-mode optical fiber 60. The optical coupler 56 connected to the hollow-core optical fiber 10 may include a graded-index lens with a length of between 0.225 pitch and 0.275 pitch, and more preferably about one quarter-pitch. The optical coupler connected to the single-mode optical fiber 60 may include a graded-index lens having a length substantially less than a quarter-pitch. For example, the graded-index lens connected to the single-mode optical fiber 60 may be provided by a length of graded-index optical fiber 42 having an 80 $\mu$m core and a length less than or equal to 20 $\mu$m, e.g., about 10 $\mu$m. The combined length of the graded-index lenses of optical couplers 56 may provide an equivalent optical effect as a single graded-index lens having a length of about 470 to 480 $\mu$m. Accordingly, the mode field of the hollow-core optical fiber 10 may be imaged into the single-mode optical fiber 60, and that of the single-mode optical fiber 60 onto the hollow-core optical fiber 10, such that a low connection loss is achieved.

Fig. 14 depicts another exemplary fiber optic coupling system 54 operatively coupling a hollow-core optical fiber 10 and a single-mode optical fiber 60. The fiber optic coupling system 54 of Fig. 14 is similar to the fiber optic coupling system 54 of Fig. 13, except that the optical coupler 56 for the single-mode optical fiber 60 has been omitted. The optical coupler 56 may have a length (e.g., 460 um) that causes the optical coupler 56 to image the mode field of the hollow-core optical fiber 10 onto the single-mode optical fiber 60, and to expand the mode field of the single-mode optical fiber 60 into an optical beam having a beam diameter similar to that of mode field of the hollow-core optical fiber 10. The fiber optic coupling system 54 may thereby achieve a low connection loss between the hollow-core optical fiber 10 and the single-mode optical fiber 60.

Fig. 15 depicts another exemplary fiber optic coupling system 54 operatively coupling two hollow-core optical fibers 10. In this embodiment, each optical coupler 56 may be provided by short length of coreless optical fiber 78. The length of the coreless optical fiber 78 may be equal to or less than 20 $\mu$m, e.g., about 10 $\mu$m. In this embodiment, the optical coupler 56 may provide an optical window that keeps foreign matter (e.g., dust and moisture) out of the hollow-core optical fiber 10. As with the previously described optical couplers 56, each hollow-core optical fiber 10 and optical coupler 56 paring may be positioned by (e.g., within) the bore 74 of a respective ferrule 72. The total length of the optical couplers 56 may be sufficiently short (e.g., about 20 to 40 $\mu$m) such that the optical beam does not diverge significantly while propagating between the hollow-core optical fibers 10. The wider optical beam of the hollow-core optical fiber 10 (e.g., about 32 $\mu$m) versus that of the standard single-mode optical fiber 60 (e.g., about 10.5 $\mu$m) may contribute to a lower beam divergence, and thus reduce expansion of the optical beam. The combination of a short collective optical coupler length and relatively low beam divergence may result in an acceptably low connection loss.

Fig. 16 depicts another exemplary fiber optic coupling system 54 operatively coupling a hollow-core optical fiber 10 and single-mode optical fiber 60. In this embodiment, the optical coupler 56 connected to the hollow-core optical fiber 10 includes a short length of coreless optical fiber 78, and the optical coupler 56 connected to the single-mode optical fiber 60 includes a graded-index lens with a length of between 0.225 pitch and 0.275 pitch, and more preferably about one quarter-pitch. The graded-index lens may be provided by a graded-index optical fiber 42 having a length between 430-490 $\mu$m, for example. The optical coupler 56 connected to the single-mode optical fiber 60 may receive the optical beam emitted from the single-mode optical fiber 60 and emit an optical beam having a width about the same as the modulation beam diameter of the hollow-core optical fiber 10. The relatively wide optical beam emitted from the end face 58 of the optical coupler 56 coupled to the single-mode optical fiber 60 may pass through the optical coupler 56 of hollow-core optical fiber 10 with little change in beam width. The combination of the collimating optical coupler 56 connected to the single-mode optical fiber 60 and pass-through optical coupler 56 on the hollow-core optical fiber 10 may produce an acceptably low connection loss.

Fig. 17 depicts an exemplary fiber optic coupling system 54 between two hollow-core optical fibers 10 where the optical interface 76 is defined by ferrules 72 of an angled physical contact connector. In this embodiment, the optical couplers 56 may have an end face that is polished at an angle, e.g., 8 or 9 degrees from vertical. At least a portion of the end face of each ferrule 72 may also be polished with the optical coupler 56 such that the end face of the ferrule 72 is also be angled. The angled end faces 58 of optical couplers 56 may prevent a portion of the optical beam from being reflected back into the optical fiber from which it was emitted at the optical interface 76.

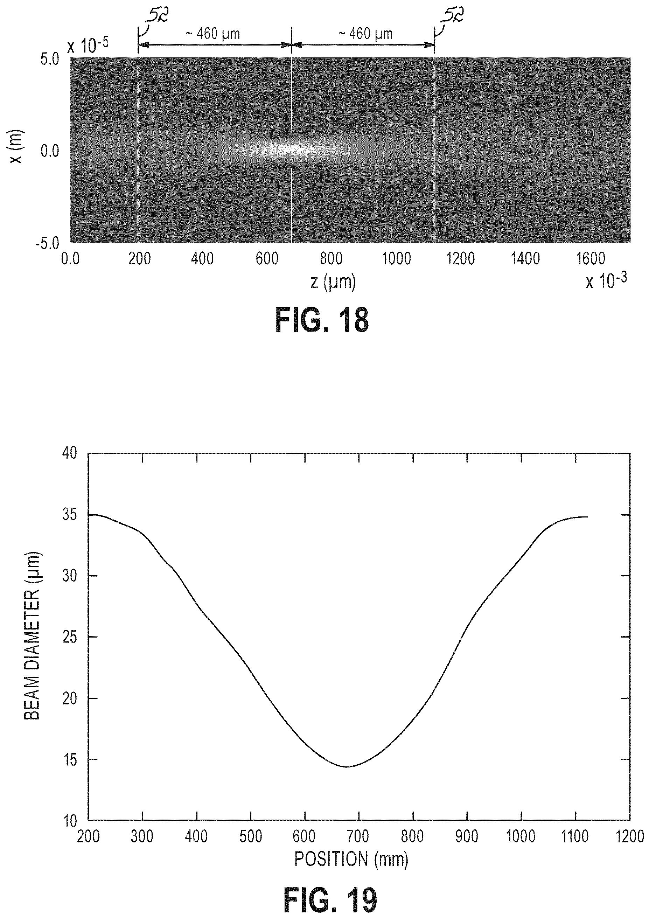

Figs. 18 and 19 depict the behavior of a beam of light propagating through various portions of a fiber optic coupling system 54, and may provide some insight into the functioning of the fiber optic coupling systems 54 of Figs. 13-17. Specifically, Fig. 18 depicts a beam of light having a wavelength of about 1550 nm propagating from left to right through a 200 $\mu$m length of hollow-core optical fiber 10, a 920 $\mu$m length of graded-index optical fiber 42 having an 80 $\mu$m core diameter and the index profile depicted by Fig. 9, and a 600 $\mu$m length of hollow-core optical fiber 10. Fig. 19 depicts the 1/e beam diameter versus distance for the beam of light of Fig. 18 as it propagates through the graded-index optical fiber 42. The mode field diameter of each hollow-core optical fiber 10 is about 34 $\mu$m. As can be seen, the beam diameter reaches a minimum in the graded-index optical fiber 46 about one quarter-pitch (e.g., 460 $\mu$m) from the initial transition 52. The beam diameter expands back to about its original value (i.e., the beam diameter at z $\approx$ 200 $\mu$m) by the later transition 52, which is about a half-pitch from the initial transition 52. The output of the left hollow-core optical fiber 10 is thereby imaged onto the end face of the right hollow-core optical fiber 10. The beam diameters depicted by the graph of Fig. 19 are consistent with the above observations.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The present disclosure in its broader aspects is therefore not limited to the specific details, representative apparatus and methods and illustrative examples shown and described. Accordingly, departures may be made from such details without departing from the scope of the present disclosure.

**Claims**

1.    A system for coupling optical fibers, comprising:

   a first ferrule having a first bore;
   a second ferrule having a second bore;
   a first hollow-core optical fiber including an end face positioned by the first bore of the first ferrule;
   a second optical fiber that is one of a second hollow-core optical fiber or a solid-core optical fiber including an end face positioned by the second bore of the second ferrule; and
   a first optical coupler including a first end face operatively coupled to a second end face by a first graded-index lens, wherein:

      the first end face of the first optical coupler is connected to the end face of one the first hollow-core optical fiber or the second optical fiber,
      the first end face of the first optical coupler is positioned within the first bore of the first ferrule if the first end face of the first optical coupler is connected to the end face of the first hollow-core optical fiber, and
      the first end face of the first optical coupler is positioned within the second bore of the second ferrule if the first end face of the first optical coupler is connected to the end face of the second optical fiber.

2.    The system of claim 1, further comprising:
   a second optical coupler including a first end face operatively coupled to a second end face by a second graded-index lens, wherein:

      the second optical fiber is the second hollow-core optical fiber,
      the end face of the first hollow-core optical fiber is connected to the first end face of the first optical coupler and positioned within the first bore of the first ferrule,
      the end face of the second hollow-core optical fiber is connected to the first end face of the second optical coupler and positioned within the second bore of the second ferrule, and

the second end face of the first optical coupler is operatively coupled to the second end face of the second optical coupler by positioning the first ferrule relative to the second ferrule to define an optical interface therebetween.

3. The system of claim 1, wherein:

the second optical fiber is the solid-core optical fiber,
the end face of the first hollow-core optical fiber is connected to the first end face of the first optical coupler and positioned within the first bore of the first ferrule, and
the second end face of the first optical coupler is operatively coupled to the end face of the solid-core optical fiber by positioning the first ferrule relative to the second ferrule to define an optical interface therebetween.

4. The system of claim 1, further comprising:
a second optical coupler including a first end face and a second end face, wherein:

the second optical fiber is the solid-core optical fiber,
the end face of the solid-core optical fiber is connected to the first end face of the first optical coupler and positioned within the second bore of the second ferrule,
the end face of the first hollow-core optical fiber is connected to the first end face of the second optical coupler and positioned within the first bore of the first ferrule, and
the second end face of the first optical coupler is operatively coupled to the second end face of the second optical coupler by positioning the first ferrule relative to the second ferrule to define an optical interface therebetween.

5. The system of claim 4, wherein the second optical coupler includes one of a coreless optical fiber having a length less than or equal to 20 $\mu$m or a graded-index optical fiber having a length less than or equal to 20 $\mu$m that operatively couples the first end face of the second optical coupler to the second end face of the second optical coupler.

6. The system of any of claims 1-5, wherein each graded-index lens comprises a graded-index optical fiber.

7. The system of claim 6, wherein the graded-index optical fiber has a core diameter of between 72 $\mu$m and 88 $\mu$m and a refractive index delta of between 0.9% and 1.1%.

8. The system of any of claims 1-7, wherein each graded-index lens has a length of between 0.225 pitch and 0.275 pitch.

9. The system of claim 8, wherein each graded-index lens has a length of a quarter-pitch.

10. The system of any of claims 1-9, wherein each connection between each optical coupler and each end face is made using fusion splicing.

11. A method for coupling optical fibers, comprising:

positioning an end face of a first hollow-core optical fiber with a bore of a first ferrule;
positioning the end face of a second optical fiber that is one of a second hollow-core optical fiber or a solid-core optical fiber with the bore of a second ferrule;
connecting a first end face of a first optical coupler including a first graded-index lens to the end face of one of the first hollow-core optical fiber or the second optical fiber;
positioning the first end face of the first optical coupler within the bore of the first ferrule if the first end face of the first optical coupler is connected to the end face of the first hollow-core optical fiber, and
positioning the first end face of the first optical coupler within the bore of the second ferrule if the first end face of the first optical coupler is connected to the end face of the second optical fiber.

12. The method of claim 11, wherein the second optical fiber is the second hollow-core optical fiber, the end face of the first hollow-core optical fiber is connected to the first end face of the first optical coupler and positioned within the bore of the first ferrule, and further comprising:

connecting the end face of the second hollow-core optical fiber to a first end face of a second optical coupler including a second graded index lens,
positioning the first end face of the second optical coupler within the bore of the second ferrule, and
operatively coupling a second end face of the first optical coupler to the second end face of the second optical coupler by positioning the first ferrule relative to the second ferrule to define an optical interface therebetween.

13. The method of claim 11, wherein the second optical fiber is the solid-core optical fiber, the end face of the first hollow-core optical fiber is connected to the first end face of the first optical coupler and positioned within the bore of the first ferrule, and further comprising:
operatively coupling a second end face of the first optical coupler to the end face of the solid-core optical fiber by positioning the first ferrule relative to the second ferrule to define an optical interface therebetween.

14. The method of claim 11, wherein the second optical fiber is the solid-core optical fiber, the end face of the solid-core optical fiber is connected to the first end face of the first optical coupler and positioned within the bore of the second ferrule, and further comprising:

connecting the end face of the first hollow-core optical fiber to a first end face of a second optical coupler, positioning the first end face of the second optical coupler within the bore of the first ferrule, and operatively coupling a second end face of the first optical coupler to a second end face of the second optical coupler by positioning the first ferrule relative to the second ferrule to define an optical interface therebetween.

15. The method of any of claims 11-14, wherein each graded-index lens comprises a graded-index optical fiber.

**FIG. 1**

**FIG. 2**

**FIG. 3**

**FIG. 4**

**FIG. 5**

FIG. 6

FIG. 7

FIG. 8

**FIG. 9**

**FIG. 10**

FIG. 11

FIG. 12

FIG. 13

**FIG. 14**

**FIG. 15**

**FIG. 16**

**FIG. 17**

**FIG. 18**

**FIG. 19**

**EUROPEAN SEARCH REPORT**

Application Number

EP 25 19 0124

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 215 003 A (UNIV GUANGDONG TECHNOLOGY) 12 December 2023 (2023-12-12) * paragraphs [0015], [0017]; figures 2-4 * | 1-15 | INV. G02B6/02 G02B6/255 G02B6/26 G02B6/32 |
| X | US 2021/396931 A1 (HARKER ANDREW THOMAS [GB] ET AL) 23 December 2021 (2021-12-23) * paragraph [0061]; figures 9,10 * | 1-15 | |
| X | FR 3 144 324 A1 (ORANGE [FR]) 28 June 2024 (2024-06-28) * figures 1-5 * | 1-15 | |
| A | TER-HOE LOH ET AL: "Realization of multilayer Si/SiO2 super-high N.A. GRIN lens on Si-waveguide coupling to single-mode optical fibre", CONFERENCE ON LASERS AND ELECTRO-OPTICS (CLEO) AND QUANTUM ELECTRONICS AND LASER SCIENCE CONFERENCE (QELS), 2010 : 16 - 21 MAY 2010, SAN JOSE, CA, USA, IEEE, PISCATAWAY, NJ , USA, 16 May 2010 (2010-05-16), pages 1-2, XP031701796, ISBN: 978-1-55752-890-2 * the whole document * | 5 | |
| A | US 8 391 661 B2 (MOLIN DENIS [FR]; BIGOT-ASTRUC MARIANNE [FR] ET AL.) 5 March 2013 (2013-03-05) * figures 10-13 * | 7 | |
| A | WO 2023/035828 A1 (HUAWEI TECH CO LTD [CN]; UNIV JINAN [CN]) 16 March 2023 (2023-03-16) | 1-15 | |

TECHNICAL FIELDS SEARCHED (IPC)

G02B

The present search report has been drawn up for all claims

| Place of search | Date of completion of the search | Examiner |
|---|---|---|
| The Hague | 10 November 2025 | Kapsalis, Alexandros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 0124

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2025

| Patent document cited in search report | | Publication date | Patent family member(s) | | Publication date |
|---|---|---|---|---|---|
| CN 117215003 | A | 12-12-2023 | NONE | | |
| US 2021396931 | A1 | 23-12-2021 | CN | 112789534 A | 11-05-2021 |
| | | | EP | 3861386 A1 | 11-08-2021 |
| | | | JP | 7371828 B2 | 31-10-2023 |
| | | | JP | 2022502716 A | 11-01-2022 |
| | | | SG | 11202103114V A | 29-04-2021 |
| | | | US | 2021396931 A1 | 23-12-2021 |
| | | | US | 2024319441 A1 | 26-09-2024 |
| | | | WO | 2020070487 A1 | 09-04-2020 |
| FR 3144324 | A1 | 28-06-2024 | EP | 4639244 A1 | 29-10-2025 |
| | | | FR | 3144324 A1 | 28-06-2024 |
| | | | WO | 2024133462 A1 | 27-06-2024 |
| US 8391661 | B2 | 05-03-2013 | CN | 102621625 A | 01-08-2012 |
| | | | DK | 2482106 T3 | 01-09-2014 |
| | | | EP | 2482106 A1 | 01-08-2012 |
| | | | ES | 2494640 T3 | 15-09-2014 |
| | | | US | 2012195561 A1 | 02-08-2012 |
| WO 2023035828 | A1 | 16-03-2023 | CN | 115774305 A | 10-03-2023 |
| | | | EP | 4361690 A1 | 01-05-2024 |
| | | | US | 2024264385 A1 | 08-08-2024 |
| | | | WO | 2023035828 A1 | 16-03-2023 |

For more details about this annex : see Official Journal of the European Patent Office, No. 12/82

**EP 4 682 599 A1**

**Patent documents cited in the description**

- US 63673316